# EUROPEAN PATENT APPLICATION

(11) **EP 4 783 331 A1**
(43) Date of publication of application: **29.07.2026**
(21) Application number: 25845177.2
(22) Date of filing: 03.07.2025
(51) Int. Cl.: H01M 50/30, H01M 50/103, H01M 50/548

(54) **BATTERY CELL AND BATTERY PACK INCLUDING SAME**

(30) Priority: 22.07.2024 KR 20240096542; 02.07.2025 KR 20250088460
(71) Applicant: LG Energy Solution, Ltd., Seoul 07335 (KR)
(72) Inventor: YUN, Hyunwoong, Daejeon 34122 (KR)
(74) Representative: Goddar, Heinz J.
(86) International application number: PCT/KR2025/009489
(87) International publication number: WO 2026/023913

(57) **Abstract**

A battery cell according to an embodiment of the present disclosure comprises an electrode assembly in which a first electrode, a second electrode, and a separator interposed between the first electrode and the second electrode are sequentially stacked multiple times; a battery case that incorporates the electrode assembly and extends along a longitudinal direction of the electrode assembly; at least two degassing holes formed on an outer surface of the battery case; and a cover part that covers each of the at least two degassing holes, wherein the battery case is a prismatic case, and wherein in a state where the degassing holes are opened, the pressure inside the battery case is formed lower than the atmospheric pressure, and then the degassing holes are covered by the cover part.

## Description

### TECHNICAL FIELD

### Cross-Reference to Related Application(s)

This application claims priority to and the benefit of Korean Patent Application no. 10-2024-0096542, filed on July 22, 2024, and Korean Patent Application no. 10-2025-0088460, filed on July 2, 2025, the disclosures of which are hereby incorporated by reference in their entirety

The present disclosure relates to a battery cell and a battery pack including the same, and more particularly, to a battery cell configured such that at least two degassing holes are formed in the battery case, and a battery pack including the same.

### BACKGROUND

Secondary batteries which are highly applicable to various products and exhibit superior electrical properties such as high energy density, etc. are commonly used not only in portable devices but also in electric vehicles or hybrid electric vehicles driven by electrical power sources. Such a secondary battery is getting a lot of attention as a novel energy source for enhancing environment friendliness and energy efficiency, in that it has a primary advantage of remarkably reducing the use of fossil fuels, and also generates no by-products from the use of energy.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely chargeable/dischargeable, have low self-discharge rates, and have high energy density, as compared to nickel-based secondary batteries.

In general, according to the shapes of exterior cases, lithium secondary batteries may be classified into cylindrical or prismatic secondary batteries fabricated by mounting the electrode assembly in a metal can, and pouch-shaped secondary batteries fabricated by mounting the electrode assembly in a pouch made of an aluminum laminate sheet.

At this time, the lithium secondary battery undergoes an activation process involving multiple charge-discharge cycles while the electrode assembly is housed within the battery case. During this activation process, a large amount of gas may be generated inside the lithium secondary battery. At this time, in the case of a general pouch-type battery, a degassing process is typically performed to release the gas generated inside the battery case to the outside after the activation process. Through the degassing process, the gas inside the lithium secondary battery can be discharged to the outside.

However, the conventional prismatic battery lacked a degassing process, thereby making it impossible to discharge the gas inside the battery to the outside, and the generated gas caused a problem of degrading the long-term battery life of the secondary batteries. Therefore, there is a need to develop a structure that enables the degassing process to be performed on prismatic batteries.

### DETAILED DESCRIPTION OF THE INVENTION

### Technical Problem

It is an object of the present disclosure to provide a battery cell configured such that at least two degassing holes are formed in the battery case, and a battery pack including the same.

The objects of the present disclosure are not limited to the aforementioned objects, and other objects not described herein should be clearly understood by those skilled in the art from the following detailed description and the accompanying drawings.

### Technical Solution

According to an aspect of the present disclosure, there is provided a battery cell comprising: an electrode assembly in which a first electrode, a second electrode, and a separator interposed between the first electrode and the second electrode are sequentially stacked multiple times; a battery case that incorporates the electrode assembly and extends along a longitudinal direction of the electrode assembly; at least two degassing holes formed on an outer surface of the battery case; and a cover part that covers each of the at least two degassing holes, wherein the battery case is a prismatic case, and wherein in a state where the degassing holes are opened, the pressure inside the battery case is formed lower than the atmospheric pressure, and then the degassing holes are covered by the cover part.

The at least two degassing holes may be respectively disposed at positions adjacent to both side surfaces of the battery case.

The battery cell comprises a pair of electrode terminals that are electrically connected to the first electrode and the second electrode, respectively, wherein the pair of electrode terminals may protrude respectively toward the outside of the battery case.

In the pair of electrode terminals, one of the at least two degassing holes may be disposed at a position adjacent to an electrode terminal electrically connected to the first electrode, and the other of the at least two degassing holes may be disposed at a position adjacent to an electrode terminal electrically connected to the second electrode.

Based on the longitudinal direction of the electrode assembly, the pair of electrode terminals may extend respectively along opposite directions to each other, the pair of electrode terminals may protrude respectively toward the outside of the battery case from both ends of the battery case, and the at least two degassing holes may be respectively disposed at both ends of the battery case.

The at least two degassing holes may be respectively disposed at mutually separated positions on the upper part of the pair of electrode terminals.

The pair of electrode terminals may be respectively protruded toward the outside of the battery case from the upper part of the battery case, and the at least two degassing holes may be respectively disposed on the upper part of the battery case.

The at least two degassing holes may be respectively disposed at mutually separated positions on both ends of the upper part of the battery case, with the pair of electrode terminals being interposed therebetween.

The at least two degassing holes and the cover part may be welded and bonded with each other.

The prismatic case may be made of a can type.

According to another aspect of the present disclosure, there is provided a battery pack comprising the above-mentioned battery cell.

### Advantageous Effects

According to specific embodiments, a battery cell and a battery pack including the same of the present disclosure have a structure in which at least two degassing holes are formed in the battery case, thereby allowing gas generated within the battery cell during the activation process to be discharged to the outside of the battery cell.

In addition, a battery cell and a battery pack including the same of the present disclosure are configured such that the pressure inside the battery case is lower than the atmospheric pressure, and that the degassing hole is covered by a cover part, thereby minimizing the occurrence of lithium plating inside the battery cell.

The effects of the present disclosure are not limited to the effects mentioned above, and additional other effects not described above will be clearly understood from the detailed description and the accompanying drawings by those skilled in the art.

### BRIEF DESCRIPTION OF THE DRAWINGS

FIG. 1 is a perspective view illustrating a battery cell according to an embodiment of the present disclosure.
FIG. 2 is an exploded perspective view of a prismatic case, showing a structure in which the electrode assembly included in the battery cell of FIG. 1 is omitted.
FIG. 3 is a top view illustrating the electrode assembly included in the battery cell of FIG. 1.
FIG. 4 is a perspective view illustrating a battery cell according to another embodiment of the present disclosure.
FIG. 5 is an exploded perspective view of a prismatic case, showing a structure in which the electrode assembly included in the battery cell of FIG. 4 is omitted.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, a battery cell according to an embodiment of the present disclosure will be described.

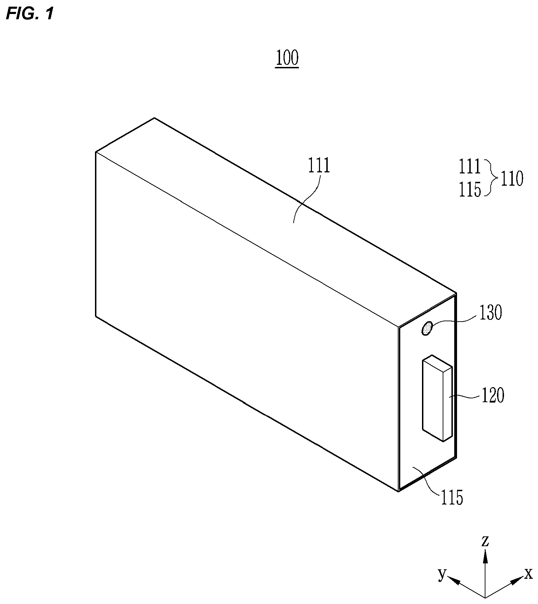

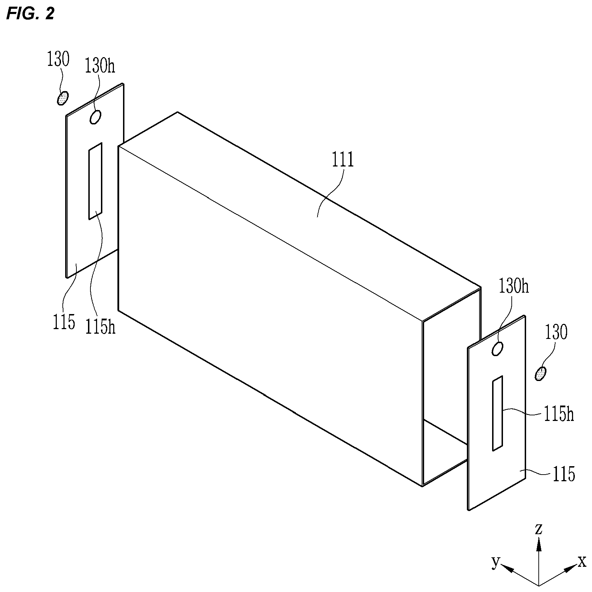

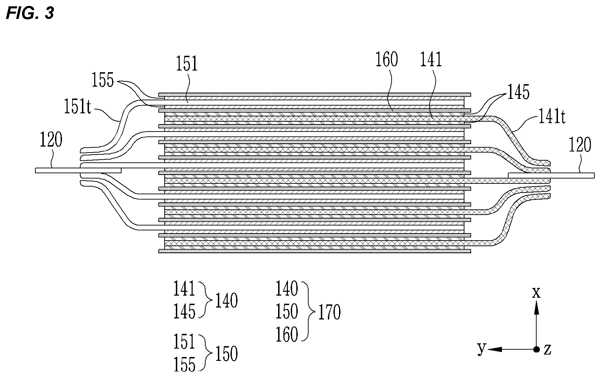

FIG. 1 is a perspective view illustrating a battery cell according to an embodiment of the present disclosure. FIG. 2 is an exploded perspective view of a prismatic case, showing a structure in which the electrode assembly included in the battery cell of FIG. 1 is omitted. FIG. 3 is a top view illustrating the electrode assembly included in the battery cell of FIG. 1.

Referring to FIGS. 1 to 3, the battery cell 100 according to an embodiment of the present disclosure comprises: an electrode assembly 170 in which a first electrode 140, a second electrode 150, and a separator 160 interposed between the first electrode 140 and the second electrode 150 are sequentially stacked multiple times; a battery case 110 that incorporates the electrode assembly 170 and extends along a longitudinal direction of the electrode assembly 170. Here, the battery case 110 can accommodate an electrode assembly 170 along with an electrolyte solution inside.

Referring to FIGS. 1 to 3, the battery case 110 may be a prismatic case in the shape of a hexahedron having a space capable of accommodating the electrode assembly 170. In other words, the battery case 110 may be a prismatic case made of a can type. As an example, the battery case 110 may be made of a heat-resistant metal, such as aluminum (Al), nickel (Ni), iron (Fe), titanium (Ti), chromium (Cr), or tungsten. As another example, the battery case 110 may be made of a heat-resistant metal, such as aluminum (Al), nickel (Ni), iron (Fe), titanium (Ti), chromium (Cr), or tungsten, and the inner and/or outer surfaces of the battery case 110 may be subjected to insulation coating treatment.

More specifically, the battery case 110 may include a main body case 111 that is opened at both ends based on the longitudinal direction of the electrode assembly 170, and side surface cases 115 that cover both ends of the battery case 110. However, the shape of the battery case 110 is not limited thereto, and may be included in the present embodiment as long as the battery case 110 has a structure that can easily accommodate the electrode assembly 170 inside.

As an example, the portions where the main body case 111 and the side surface case 115 abut against each other may be fastened by a method such as welding, and the inside of the battery case 110 may be sealed from the external environment. However, the method is not limited thereto, and may be included in the present embodiment as long as it is a joining method capable of sealing the inside of the battery case 110.

Referring to FIG. 3, the electrode assembly 170 may be a stacking-type electrode assembly in which a first electrode 140, a second electrode 150, and a separator 160 interposed between the first electrodes 140 and second electrodes 150 are alternately stacked. However, the electrode assembly is not limited thereto, and may be a stacking-folding type electrode assembly that has a structure in which a first electrode 140 and a second electrode 150 are stacked, with a separator 160 being interposed between the first electrodes 140 and second electrodes 150, and is folded to wrap around the first electrode 140 and/or the second electrode 150.

Referring to FIG. 3, the first electrode 140 may include a first electrode current collector 141 and a first electrode active material layer 145 formed on the upper and lower surfaces of the first electrode current collector 141, and the second electrode 150 may include a second electrode current collector 151 and a second electrode active material layer 155 formed on the upper and lower surfaces of the second electrode current collector 151.

Here, the first electrode 140 may be a positive electrode, and the second electrode 150 may be a negative electrode. If the first electrode 140 is a positive electrode, the first electrode current collector 141 may correspond to a positive electrode current collector, and the first electrode active material layer 145 may correspond to a positive electrode active material layer. In addition, if the second electrode 150 is a negative electrode, the second electrode current collector 151 may correspond to a negative electrode current collector, and the second electrode active material layer 155 may correspond to a negative electrode active material layer. Although not limited thereto, the opposite case may also be included in the present embodiment.

The first electrode 140 may include a first electrode tab 141t, and the second electrode 150 may include a second electrode tab 151t. More specifically, the first electrode tab 141t is a region where the first electrode active material layer 145 is not formed on the upper and lower surfaces of the first electrode current collector 141, and may be located at one end of the first electrode current collector 141. The second electrode tab 151t is a region where the second electrode active material layer 155 is not formed on the upper and lower surfaces of the second electrode collector 151, and may be located at one end of the second electrode current collector 151.

Thereby, the battery cell 100 according to the present embodiment includes an electrode assembly 170 in which a first electrode 140, a second electrode 150, and a separator interposed between the first electrode 140 and the second electrode 150 are sequentially stacked multiple times, thereby providing the advantage that more parallel connections between electrodes can be made, resistance can be effectively reduced, and the space utilization rate and the battery capacity inside the battery case 110 can be further improved.

However, the shape of the electrode assembly 170 incorporated into the battery cell 100 according to the present embodiment is not limited thereto, and the case including a jellyroll-type electrode assembly in which a first electrode sheet, a second electrode sheet, and a separator sheet are wound up in a state where the separator sheet is disposed between the first electrode sheet and the second electrode sheet may also be included in the present embodiment.

Referring to FIGS. 1 to 3, the battery cell 100 according to the present embodiment includes a pair of electrode terminals 120 that are electrically connected to a first electrode 140 and a second electrode 150, respectively, and the pair of electrode terminals 120 may protrude respectively toward the outside of the battery case 110. As an example, if the first electrode 140 is a positive electrode, one of the pair of electrode terminals 120 may be a positive electrode terminal, and if the second electrode 150 is a negative electrode, the other of the pair of electrode terminals 120 may be a negative electrode terminal. Although not limited thereto, the opposite case may also be included in the present embodiment.

More specifically, one of the pair of electrode terminals 120 may be electrically connected to the first electrode tab 141t of the first electrode 140, and the other of the pair of electrode terminals 120 may be electrically connected to the second electrode tab 151t of the second electrode 150. As an example, one of the pair of electrode terminals 120 may be welded to the first electrode tab 141t and the second electrode tab 151t, respectively.

Referring to FIG. 1, based on the longitudinal direction of the electrode assembly 170, a pair of electrode terminals 120 extend respectively in opposite directions, and the pair of electrode terminals 120 protrudes respectively toward the outside from both ends of the battery case 110.

Here, both ends of the battery case 110 may refer to both side surfaces of the battery case 110 that are located based on the longitudinal direction of the electrode assembly 170. In other words, the both ends of the battery case 110 may refer to the side surface cases 115.

Further, a pair of electrode terminals 120 protruding toward the outside of the battery case 110 may each be electrically connected to electrical elements external to the battery cell 100.

Thereby, the battery cell 100 according to the present embodiment has a structure in which a pair of electrode terminals 120 protrude in both directions, thereby simplifying the assembly process and components for forming an electrical connection structure between the electrode tabs 141t, 151t and the electrode terminals 120.

Referring to FIGS. 1 and 2, both ends of the battery case 110 may be formed with terminal insertion holes 115h, respectively. Here, the both ends of the battery case 110 may refer to the side surface case 115. The terminal insertion holes 115h may be formed at one end of the battery case 110 where one of the pair of electrode terminals 120 is located, and the other end of the battery case 110 where the other of the pair of electrode terminals 120 is located.

Here, the pair of electrode terminals 120 may each pass through a terminal insertion hole 115h and protrude to the outside of the side surface case 115. At this time, a separate gasket (not shown) may be disposed between the pair of electrode terminals 120 and the terminal insertion hole 115h, respectively.

Therefore, the battery cell 100 according to the present embodiment can prevent contact between the side surface case 115 of the battery case 110 corresponding to a metal member, and the pair of electrode terminals 120, and also can further enhance the insulation between the side surface case 115 of the battery case 110 and the pair of electrode terminals 120.

Referring to FIGS. 1 and 2, the battery cell 100 according to the present embodiment includes at least two degassing holes 130h formed on the outer surface of the battery case 110 and a cover part 130 that covers each of the at least two degassing holes 130h.

More specifically, the degassing holes 130h and the cover part 130 may have shapes corresponding to each other. As an example, as shown in FIGS. 1 and 2, the degassing holes 130h and the cover part 130 may have a circular shape. However, the shape is not limited thereto, and may be included in the present embodiment as long as it is a shape that allows the battery cell 100 to be easily sealed while easily discharging gas inside the battery cell 100.

As an example, the degassing holes 130h and the cover part 130 may be welded and bonded to each other. More specifically, the space between the degassing hole 130h and the cover part 130 is sealed by welding, so that the cover part 130 can be completely embedded within the degassing hole 130h.

Thus, in the battery cell 100 according to the present embodiment, as the degassing hole 130h and the cover part 130 are welded and bonded to each other, the bond between the degassing hole 130h and the cover part 130 cannot break even under pressures exceeding 5 bar. That is, even if the pressure inside the battery cell 100 increases, the cover part 130 can prevent the inside of the battery cell 100 from being exposed to the atmosphere and also prevent the inside of the battery cell 100 from being degraded due to contact with the atmosphere.

As another example, the cover part 130 may be made of a taping material or polypropylene resin (PP resin) that covers the degassing hole 130h. More specifically, the space between the degassing hole 130h and the cover part 130 may be sealed, and the cover part 130 may be removed as required for the process, and then the degassing hole 130h may then be re-sealed.

Thus, in the battery cell 100 according to the present embodiment, as the cover part 130 is made of a taping material or polypropylene resin (PP resin), the degassing hole 130h can be opened and closed as required for the process. That is, when the degassing hole 130h is opened, the electrolyte solution can be injected or degassed through the degassing hole 130h. When the degassing hole 130h is closed, an activation process can be performed, thereby providing the advantage that the degassing hole 130h can be recycled in the degraded battery cell 100.

In the battery cell 100 according to the present embodiment, in a state where the degassing holes 130h are opened, the pressure inside the battery case 110 is formed lower than the atmospheric pressure, and then the degassing holes 130h are covered by the cover part 130. In other words, in a state where the degassing holes 130h are opened, gas inside the battery cell 100 may be discharged to the outside of the battery cell 100 through the degassing holes 130h. Then, after the gas inside the battery cell 100 has been sufficiently discharged, the pressure inside the battery cell 100 can be adjusted to a negative pressure state lower than atmospheric pressure, and the degassing hole 130h can be covered by the cover part 130 in a state where the inside of the battery cell 100 is a negative pressure.

Therefore, in the battery cell 100 according to the present embodiment, gas generated inside the battery cell 100 during the activation process can be easily discharged to the outside of the battery cell 100 through the degassing hole 130h.

In addition, the inside of the battery cell 100 can be maintained in a negative pressure state, which can prevent a phenomenon in which a small amount of gas generated during charging and discharging after activation of the battery cell 100 is trapped inside the electrode assembly 170, and also can prevent lithium plating that may occur around this trapped gas.

That is, when the inside of the battery cell 100 is in a negative pressure state, gas generated inside the electrode assembly 170 can be released to the outside of the electrode assembly 170 due to the pressure difference, thereby minimizing gas trapped inside the electrode assembly 170, and effectively preventing lithium plating.

At least two degassing holes 130h may be disposed at positions adjacent to both side surfaces of the battery case 110. More specifically, at least two degassing holes 130h are respectively disposed at both ends of the battery case 110. In other words, at least two degassing holes 130h may be respectively disposed on side surface cases 115 of the battery case 110. However, the present embodiment is not limited to the case where the at least two degassing holes 130h include two degassing holes 130h as shown in FIGS. 1 and 2. Unlike FIGS. 1 and 2, the present embodiment may also include a case in which two or more degassing holes 130h are respectively disposed at positions adjacent to both side surfaces of the battery case 110.

As an example, as shown in FIGS. 1 and 2, one of the at least two degassing holes 130h in the pair of electrode terminals 120 may be disposed at positions adjacent to an electrode terminal electrically connected to the first electrode 140, and the other of the two degassing holes may be disposed at positions adjacent to an electrode terminal electrically connected to the second electrode 150. Here, the at least two degassing holes 130h may be disposed at mutually separated positions on the upper part of the pair of electrode terminals 120. In other words, the at least two degassing holes 130h may be disposed at positions that prevent leakage of the electrolyte contained within the battery cell 100 while avoiding each of the pair of electrode terminals 120, and may be located on the upper part of the pair of electrode terminals 120 in the side surface case 115 of the battery case 110.

Therefore, in the battery cell 100 according to the present embodiment, as at least two degassing holes 130h are respectively disposed on both side surfaces of the battery case 110, gas inside the battery cell 100 can be discharged in both directions.

In addition to this, in a battery cell 100 in which electrode terminals 120 are respectively disposed on both ends of an electrode assembly 170, at least two degassing holes 130h are disposed along he longitudinal direction of the electrode assembly 170, thereby providing the advantage of more evenly maintaining the negative pressure within the battery cell 100.

Furthermore, as the battery cell 100 according to the present embodiment includes an electrode assembly 170 having a stacked structure in which a first electrode 140, a second electrode 150, and a separator are stacked multiple times, gas generated from the electrode assembly 170 can be released in various directions rather than in a specific direction, and gas inside the battery cell 100 can be easily discharged through at least two degassing holes 130 h formed on both side surfaces of the battery case 110.

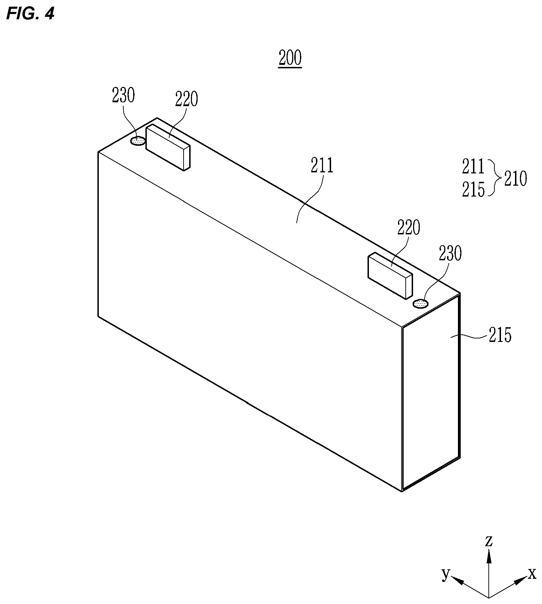

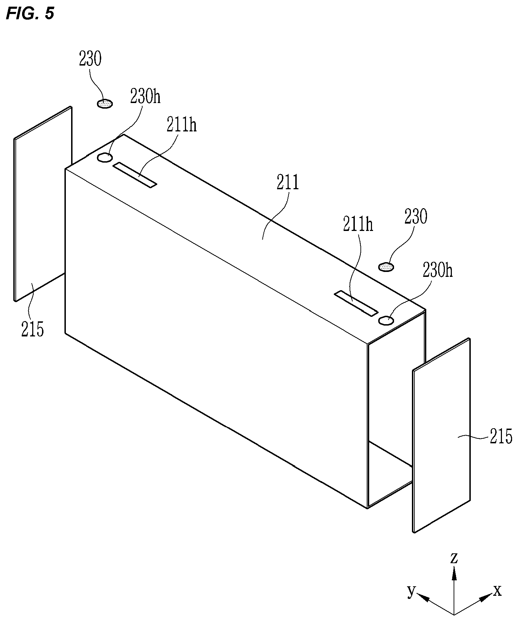

FIG. 4 is a perspective view illustrating a battery cell according to another embodiment of the present disclosure. FIG. 5 is an exploded perspective view of a prismatic case, showing a structure in which the electrode assembly included in the battery cell of FIG. 4 is omitted.

Referring to FIGS. 4 and 5, the battery cell 200 according to the present embodiment can be described in substantially the same manner as the previously described battery cell 100 shown in FIGS. 1 to 3, and only the portions that differ from the contents described above for the battery cell 100 of FIGS. 1 to 3 will be further described.

Referring to FIGS. 4 and 5, the pair of electrode terminals 220 protrude respectively toward the outside of the battery case 210 from the upper part of the battery case 210, and at least two degassing holes 230h are respectively disposed in the upper part of the battery case 210. More specifically, the at least two degassing holes 230h are located between the pair of electrode terminals 220, and may be respectively disposed at mutually separated positions on both ends of the upper part the battery case 210.

Therefore, in the battery cell 200 according to the present embodiment, at least two degassing holes 230h are disposed on both sides of the upper surface of the battery case 210, thereby discharging the gas inside the battery cell 200 in both directions while effectively preventing leakage of the electrolyte solution inside the battery cell 200.

In addition to this, in a battery cell 200 in which a pair of electrode terminals 220 are respectively disposed at both ends of an electrode assembly (not shown), at least two degassing holes 230h are disposed along the longitudinal direction of the electrode assembly 170, thereby providing the advantage of more evenly taking the negative pressure within the battery cell 200.

Further, since the battery cell 200 according to the present embodiment includes an electrode assembly 170 having a laminated structure in which the first electrode 140, the second electrode 150, and the separator are stacked multiple times, so that gas generated from the electrode assembly 170 can be released in various directions rather than in a specific direction, and the gas inside the battery cell 200 can be easily discharged through at least two degassing holes 230h disposed on both sides of the upper surface of the battery case 210.

A battery pack according to another embodiment of the present disclosure may include the above-mentioned battery cells. Meanwhile, the battery pack according to the present embodiment may be formed by directly packaging one or more of the above-mentioned battery cells in a pack case, or by producing the battery cells into battery module units and then packaging them in a pack case.

The battery pack as previously mentioned may be applied to various devices. Specifically, such devices can be applied to transportation vehicles such as an electric bike, an electric vehicle, and a hybrid electric vehicle. However, the present disclosure is not limited thereto, and can be applied to various devices capable of using a battery pack, which also falls within the scope of the present disclosure.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100, 200: battery cell
110, 210: battery case
111, 211: main body case
115, 215: side surface case
115h, 211h: terminal insertion hole
120, 220: electrode terminal
130, 230: cover part
130h, 230h: degassing hole
140: first electrode
150: second electrode
160: separator
170: electrode assembly

## Claims

1. A battery cell comprising:
an electrode assembly in which a first electrode, a second electrode, and a separator interposed between the first electrode and the second electrode are sequentially stacked multiple times;
a battery case that incorporates the electrode assembly and extends along a longitudinal direction of the electrode assembly;
at least two degassing holes formed on an outer surface of the battery case; and
a cover part that covers each of the at least two degassing holes,
wherein the battery case is a prismatic case, and
wherein in a state where the degassing holes are opened, the pressure inside the battery case is formed lower than the atmospheric pressure, and then the degassing holes are covered by the cover part.

2. The battery cell according to claim 1,
wherein the at least two degassing holes are respectively disposed at positions adjacent to both side surfaces of the battery case.

3. The battery cell according to claim 1,
comprising a pair of electrode terminals that are electrically connected to the first electrode and the second electrode, respectively,
wherein the pair of electrode terminals protrude respectively toward the outside of the battery case.

4. The battery cell according to claim 3,
wherein in the pair of electrode terminals,
one of the at least two degassing holes is disposed at a position adjacent to an electrode terminal electrically connected to the first electrode, and
the other of the at least two degassing holes is disposed at a position adjacent to an electrode terminal electrically connected to the second electrode.

5. The battery cell according to claim 2, wherein:
based on the longitudinal direction of the electrode assembly, the pair of electrode terminals extend respectively along opposite directions to each other,
the pair of electrode terminals protrude respectively toward the outside of the battery case from both ends of the battery case, and
the at least two degassing holes are respectively disposed at both ends of the battery case.

6. The battery cell according to claim 5,
wherein the at least two degassing holes are respectively disposed at mutually separated positions on the upper part of the pair of electrode terminals.

7. The battery cell according to claim 2,
wherein the pair of electrode terminals are respectively protruded toward the outside of the battery case from the upper part of the battery case, and
the at least two degassing holes are respectively disposed on the upper part of the battery case.

8. The battery cell according to claim 7,
wherein the at least two degassing holes are respectively disposed at mutually separated positions on both ends of the upper part of the battery case, with the pair of electrode terminals being interposed therebetween.

9. The battery cell according to claim 1,
wherein the at least two degassing holes and the cover part are welded and bonded with each other.

10. The battery cell according to claim 1,
wherein the prismatic case is made of a can type.

11. A battery pack comprising the battery cell according to claim 1.
